# NEUE EUROPÄISCHE PATENTSCHRIFT

(11) **EP 3 811 016 B2**
(45) Veröffentlichungstag und Bekanntmachung des Hinweises auf die Entscheidung über den Einspruch: **22.07.2026**
(45) Hinweis auf die Patenterteilung: 27.10.2021
(21) Anmeldenummer: 20739299.4
(22) Anmeldetag: 03.07.2020
(51) Int. Cl.: F28D 1/04, F28D 20/00, F24T 10/30

(54) **VORRICHTUNG ZUR ENERGIEÜBERTRAGUNG UND ZUR ENERGIESPEICHERUNG IN EINEM FLÜSSIGKEITSRESERVOIR**
DEVICE FOR ENERGY TRANSFER AND FOR ENERGY STORAGE IN A LIQUID RESERVOIR
DISPOSITIF DE TRANSFERT D'ÉNERGIE ET DE STOCKAGE D'ÉNERGIE DANS UN RÉSERVOIR DE LIQUIDE

(30) Priorität: 05.07.2019 DE 102019118223
(43) Veröffentlichungstag der Anmeldung: 28.04.2021
(73) Patentinhaber: Envola GmbH, 89081 Ulm (DE)
(72) Erfinder: SCHECHNER, Alexander, 89075 Ulm (DE); SCHWENK, Günther, 89520 Heidenheim (DE)
(74) Vertreter: Baur & Weber Patentanwälte PartG mbB
(86) Internationale Anmeldenummer: PCT/EP2020/068821
(87) Internationale Veröffentlichungsnummer: WO 2021/004937

(56) Entgegenhaltungen:
- EP-A1- 2 302 311
- WO-A1-2017/093426
- WO-A1-2019/076978
- DE-A1- 102005 037 997
- DE-A1- 102005 037 997
- DE-A1- 102012 009 926
- DE-A1- 102012 101 541
- DE-A1- 102015 121 177
- DE-A1- 3 108 431
- DE-U1- 20 203 713
- DE-U1- 202014 103 453
- HESSISCHER STAATSPREIS ENERGIE BROSCHÜRE, 2018
- ENERGY AWARDS: "Energy Awards 2018: Naturspeicher - Sieger in der Kategorie Smart Infrastructure", YOUTUBE, XP055954188, Retrieved from the Internet <URL:https://www.youtube.com/watch?v=m2Wt2PbSaqc>
- NATURSPEICHER GMBH: "Einheben eines 5025er-Naturwärmespeichers im Zeitraffer", YOUTUBE, XP055954212, Retrieved from the Internet <URL:https://www.youtube.com/watch?v=sYdWBJytIwY>

## Beschreibung

Die Erfindung betrifft eine Vorrichtung zur Energieübertragung und zur Energiespeicherung in einem Flüssigkeitsreservoir nach dem Oberbegriff des ersten Anspruchs. Eine solche Vorrichtung ist aus DE 202 03 713 U1 bekannt.

Die Verwendung fossiler Energieträger ist nicht nur zunehmend unwirtschaftlich, sondern wird auch aufgrund der damit verbundenen negativen Auswirkungen auf das Klima zunehmend in Frage gestellt. Neben einer Steigerung der Nutzung regenerativer Energiequellen sind zunehmend auch effiziente Systeme zur Energiespeicherung von Nöten, die in Kombination mit intelligenten Steuerungen beispielsweise beim Heizen von Gebäuden oder beim Kühlen von Anlagen für einen reduzierten Energieverbrauch sorgen können. Aufgrund derartiger Maßnahmen lässt sich unabhängig vom verwendeten Energieträger ein hohes Einsparpotential schaffen, was auch die damit verbundenen Installationskosten auffängt.

Aus der DE 29 26 610 A1 ist ein Speicher zur Bereitstellung der Eingangswärmeenergie auf niederem Temperaturniveau für Wärmepumpenanlagen bekannt, die diese Energie aufnehmen und auf höherem Temperaturniveau wieder abgeben. Dabei ist ein Wasserbecken so gestaltet, dass sein Wasserinhalt ohne Beckenbeschädigung einfrieren kann und dass ein am Beckenboden befindliches oder in den Beckenboden eingelassenes Wärmetauschersystem erlaubt, die Abkühlungs- und Gefrierwärme dieses Beckens der Kaltseite einer Wärmepumpe zuzuführen.

Neben der Verwendung eines künstlichen Wasserbeckens ist es auch bekannt, natürliche Gewässer als Speichermedium zu nutzen. So ist aus der DE 10 2015 104 909 A1 ein Energiespeicher bekannt, der einen Wärmetauscher aufweist, der auf einem vorzugweise über eine erste Zuleitung mit Wasser befüllbarem, als See ausgebildetem Unterbecken schwimmend angeordnet ist, wobei über eine zweite Zuleitung Wasser aus dem Unterbecken und über eine dritte Zuleitung den Wärmetauscher durchdringendes Kühlmittel einer Wärmepumpe in getrennten Kreisläufen zuführbar ist, so dass Energie über den Wärmetauscher unter Vereisung des Wassers des Unterbeckens oder in Form von sensibler Wärme aus dem Wasser des Unterbeckens entnehmbar und an einen Verbraucher zur Wärmeabgabe und/oder zur Kälteabgabe weiterleitbar ist.

Desweiteren ist aus der DE 10 2015 121 177 A1 eine schwimmende Vorrichtung zum Einbringen von Wärmeenergie in ein Gewässer sowie zum Entziehen von Wärmeenergie aus dem Gewässer bekannt, die einen Wasserwärmetauscher aufweist, der nach dem Einsetzen der Vorrichtung in das Gewässer in dieses eintaucht und einen Zulauf und einen Ablauf für eine Wärmeträgerflüssigkeit aufweist, die Wärmeenergie an das Gewässer abgeben oder dem Gewässer Wärmeenergie entziehen kann. Die Vorrichtung weist darüber hinaus einen Luftwärmetauscher auf, der von Umgebungsluft durchdrungen werden kann und darüber hinaus einen Einlass für aus dem Gewässer stammendes Wasser mit einem entsprechenden Auslass aufweist, so dass Wasser aus dem Gewässer durch den Luftwärmetauscher strömen kann, wobei Wärmeenergie zwischen der dem Luftwärmetauscher durchströmenden Umgebungsluft und dem den Luftwärmetauscher durchströmenden Wasser übertragbar ist.

Ausgehend von diesem Stand der Technik haben sich die Erfinder nun die Aufgabe gestellt, eine Vorrichtung zur Energieübertragung und zur Energiespeicherung in einem Flüssigkeitsreservoir zu schaffen, die auch ohne natürliches Gewässer genutzt werden kann und darüber hinaus besonders einfach zu installieren ist.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Die erfindungsgemäße Vorrichtung kann demnach in drei Abschnitte aufgeteilt werden, von denen der Wasserwärmetauscher zuunterst in dem Flüssigkeitsreservoir angeordnet ist. Im oberen Bereich ist der Luftwärmetauscher angeordnet, der von der Umgebungsluft durchströmt werden kann. Über diesem Luftwärmetauscher ist der Deckel angeordnet, der entsprechend gestaltet werden kann, um einen weiterhin nutzbaren Bereich, beispielsweise in einem Garten eines Wohnhauses zu schaffen, wenn die erfindungsgemäße Vorrichtung bis zum Deckel im Erdreich versenkt ist. Typischerweise werden die aktiven Bereiche des Wasserwärmetauschers und des Luftwärmetauschers über eine Hydraulikeinheit mit einer Wärmepumpe verbunden und typischerweise zum Energieaustausch von einem Glykol-Wassergemisch durchströmt. Dabei kann Energieaustausch auf unterschiedliche Weise stattfinden. Zunächst ist es möglich, zu Heizzwecken über die Wärmepumpe Umweltwärme aus dem Luftwärmetauscher zu entnehmen. Dabei kann überschüssige Umweltwärme gleichzeitig in den Wasserwärmetauscher eingeleitet werden. Falls nun nicht genügend Umweltwärme aus dem Luftwärmetauscher zu Heizzwecken zur Verfügung steht, kann diese dem Wasserwärmetauscher entzogen werden. Verfügbare Nutzwärme aus dem Luftwärmetauscher kann abgezweigt werden und dem Wasserwärmetauscher zur Regeneration und Laden des Speichers wiederum zugeführt werden. Neben der Entnahme von Umweltwärme aus dem Luftwärmetauscher kann auch zu Kühlzwecken Wärme über den Luftwärmetauscher abgegeben werden. Dabei kann teilweise Kälte abgezweigt werden und dem Wasserwärmetauscher als aktive Vorkühlung des Speichers zugeführt werden. Eine entsprechende Kältemenge kann auch dem Wasserwärmetauscher entnommen werden, um über die Wärmepumpe Wärme zu Kühlzwecken mittels des Luftwärmetauschers abzugeben. Schließlich ist es auch möglich, zur Abgabe von freier Kühlung über den Luftwärmetauscher zur freien Vorkühlung des Wasserwärmetauschers eine freie Vorkühlung des Speichers zu erreichen. Im Ergebnis wird die Vorrichtung die Effizienz der Erzeugung von Nutzwärme steigern, da der Wasserwärmetauscher Umweltwärme aus warmen Tagen, in die nicht so effizienten kalten Tage verschieben kann und dabei die Effizienz deutlich erhöht. Es ist anzunehmen, dass die erfindungsgemäße Vorrichtung eine direkte elektrische Zuheizung praktisch vollständig vermeidet oder diese deutlich verringert. Bei der Kühlung von Gebäuden und/oder Maschinen ist der Effekt der erfindungsgemäßen Vorrichtung noch ausgeprägter, da die Kühle der Nacht in den Speicher gebracht wird, um die Erzeugung der Kälte am Tag durch niedrige Quelltemperaturen zu unterstützen.

Neben dieser Effizienzsteigerung ist die erfindungsgemäße Vorrichtung so ausgeführt, dass sie den Einbau und den Betrieb einer derartigen Anlage deutlich erleichtert. Dazu wird zunächst im Erdreich die Außenhülle eingesetzt, der während des Einbaus durch einen stabilen Kern gestützt sein kann, um entsprechende Einbeulungen zu verhindern. Das Flüssigkeitsreservoir wird im Inneren der Innenhülle gebildet, wobei nach Entnahme des Kerns die Innenhülle zur Stabilisierung der Außenhülle herangezogen werden kann, was dadurch erreicht wird, dass die Außenhülle die Innenhülle vom Boden aus überdeckt. Dies ermöglicht einen einfachen Aufbau der erfindungsgemäßen Vorrichtung, die darüber hinaus auch kostengünstig installiert werden kann.

Gemäß einer Ausführungsform der Erfindung ist zwischen dem Wasserwärmetauscher und dem Luftwärmetauscher eine Isolationsschicht angeordnet, wobei zwischen der Isolationsschicht und der Außenhülle eine Abdichtung angebracht sein kann, die beispielsweise als umlaufende Manschette oder teilweise umlaufende Manschette ausgebildet sein kann.

Demnach ist es möglich, den Bereich des Wasserwärmetauschers von dem des Luftwärmetauschers zu isolieren, wobei die Kombination aus Wasserwärmetauscher, Luftwärmetauscher und Isolationsschicht als eine Baueinheit bereitgestellt sein kann, die in die Außenhülle eingebracht wird. Durch Ausbilden einer Manschette kann die entsprechende Isolationswirkung nach Einsetzen der Einheit zur Außenhülle vervollständigt werden.

Gemäß der Erfindung ist beabstandet zur Außenhülle ein auf dem Boden angebrachtes Ständerwerk vorgesehen, das den Deckel trägt. Dabei kann das Ständerwerk aus mehreren vertikalen Stützen zusammengesetzt sein, die auf der dem Deckel zugewandten Seite mit einem Verstellmechanismus versehen sein können, um die Lage des Deckels auszurichten. Dabei das Ständerwerk mit einem wenigstens teilweise umlaufenden Ringsegment versehen, das als oberer Abschluss der Innenhülle diente. Die Innenhülle ist dabei als flexible Folie ausgeführt, die in das Ringsegment eingehängt sein kann.

Demnach wird durch wenige Komponenten ein mechanisch stabiler Aufbau der Vorrichtung geschaffen, in die der Luftwärmetauscher und der Wasserwärmetauscher eingesetzt werden können und anschließend mit der Flüssigkeit des Flüssigkeitsreservoirs befüllt werden. Ein dem Deckel zugewandter Verstellmechanismus erlaubt dabei in gewissen Grenzen Neigungswinkel zwischen dem Boden und der gewünschten Lage des Deckels auszugleichen, während die Innenhülle als flexible Folie sich eventuellen Unebenheiten anpasst. Das Ständerwerk ist auf einfache Weise auf dem Boden zusammenzusetzen, wobei vorzugsweise der Boden in Form einer betonierten Bodenplatte ausgeführt sein kann. Dies ermöglicht eine deutliche Vereinfachung der vorbereitenden Tiefbauarbeiten zur Installation der Vorrichtung. Der Deckel kann auch mehrteilig ausgeführt sein und entsprechend über separate Verstellmechanismen verfügen.

Gemäß einer weiteren Ausführungsform der Erfindung ist der Lufteinlass schlitzförmig entlang des Außenumfangs des Deckels ausgebildet. Der Deckel kann dabei mit dem Luftauslass mittig am Deckel angeordnet sein, wobei unterhalb des Deckels am Luftauslass ein Ventilator angeordnet sein kann.

Diese Vorgehensweise ermöglicht es, auf einfache Weise Umgebungsluft dem Luftwärmetauscher zuzuführen. Nachdem Kälte oder Wärme über den Luftwärmetauscher ausgetauscht wird, verlässt diese über den Luftauslass den Bereich des Luftwärmetauschers, wobei der Luftstrom mittels eines Ventilators erzeugt werden kann.

Insbesondere ist es vorgesehen, dass der Deckel mit einer oder mehreren Einsenkungen versehen ist, die entweder als Pflanzbeet mit Erdreich gefüllt sein können oder auch als Wasserspiel mit Wasser befüllt werden können. Dies erlaubt es, eine naturnahe Erscheinung der Vorrichtung zu schaffen, wobei in wiederum anderen Anwendungsfällen auch eine Befahrbarkeit oder Begehbarkeit des Deckels erreicht werden kann. Aufgrund dieser Vorgehensweise ist es möglich, dass der beispielsweise im Bereich eines Gartens eines Wohnhauses für die Vorrichtung zur Verfügung zu stellende Bereich dennoch weiterhin nutzbar ist.

Im Flüssigkeitsreservoir kann als Flüssigkeitsmedium typischerweise Wasser eingebracht werden, wobei allerdings auch andere Flüssigkeiten, insbesondere Paraffinverbindungen oder dergleichen verwendet werden können. Da es sich erfindungsgemäß nicht um ein natürliches Gewässer handelt, ist die Wahl des Flüssigkeitsmediums hier nicht auf Wasser beschränkt.

Aufgrund der flexibel ausgeführten Innenhülle kann der hydrodynamische Druck im Flüssigkeitsreservoir diese gegen die Außenhülle pressen, was auch die Außenhülle weiter gegen das Erdreich stabilisiert.

Gemäß weiteren Ausführungsformen der Erfindung sind der Luftwärmetauscher und der Wasserwärmetauscher jeweils mit einer Vielzahl von kreisförmig angeordneten Rohren ausgeführt, die über Zufluss- und Abflussleitungen mit einer Anschlusseinheit verbunden sind. Dabei kann die Außenhülle von der Anschlusseinheit durchbrochen sein, die typischerweise zwischen dem Wasserwärmetauscher und dem Luftwärmetauscher angeordnet ist.

Demnach ist es möglich, bereits beim Einbringen der Außenhülle in das Erdreich eine Verbindung der typischerweise im Gebäude befindlichen Wärmepumpe mit der erfindungsgemäßen Vorrichtung zu schaffen, die über die Anschlusseinheit erfolgen kann.

Da die Außenhülle und die Einheit umfassend den Luftwärmetauscher und den Wasserwärmetauscher sequenziell eingebracht werden, können Anschlussleitungen zunächst durch das Erdreich zur Anschlusseinheit gelegt werden, so dass der Raum innerhalb der Außenhülle zunächst frei bleibt. Nach dem Einbau der Wärmetauscher werden entsprechende Zuleitungen nun von der Innenseite her zur Anschlusseinheit geführt. Diese können, um den Einbau der Einheit nicht zu stören, zunächst radial angeordnet werden, und anschließend zu den entsprechenden Anschlussorten geführt werden.

In einer besonders bevorzugten Ausführungsform sind der Luftwärmetauscher und der Wasserwärmetauscher so ausgeführt, dass die Vorrichtung eine im Wesentlichen zylindrische Außenform aufweist.

Eine derart gestaltete Vorrichtung lässt sich sowohl auf einfache Weise zum Einsatzort transportieren und kann nach Abschluss der Tiefbauarbeiten und gegebenenfalls Entnahme eines stabilisierten Kerns zügig in den vorgesehenen Freiraum eingebaut werden.

Nachfolgend werden einige Ausführungsbeispiele anhand der Zeichnung näher erläutert. Es zeigen:
- Figur 1: eine Seitenansicht einer erfindungsgemäßen Vorrichtung,
- Figur 2A: eine Schnittansicht entlang der Linie A-A' der Vorrichtung nach Figur 1 gemäß einer ersten Ausführungsform der Erfindung,
- Figur 2B: eine Schnittansicht entlang der Linie A-A' der Vorrichtung nach Figur 1 gemäß einer zweiten Ausführungsform der Erfindung,
- Figur 3: eine perspektivische Seitenansicht der Vorrichtung nach Figur 1,
- Figur 4: eine perspektivische Seitenansicht eines ersten Teils der Vorrichtung nach Figur 1, und
- Figur 5: eine perspektivische Seitenansicht eines zweiten Teils der Vorrichtung nach Figur 1.

In den Figuren sind gleiche oder funktional gleichwirkende Bauteil mit den gleichen Bezugszeichen versehen.

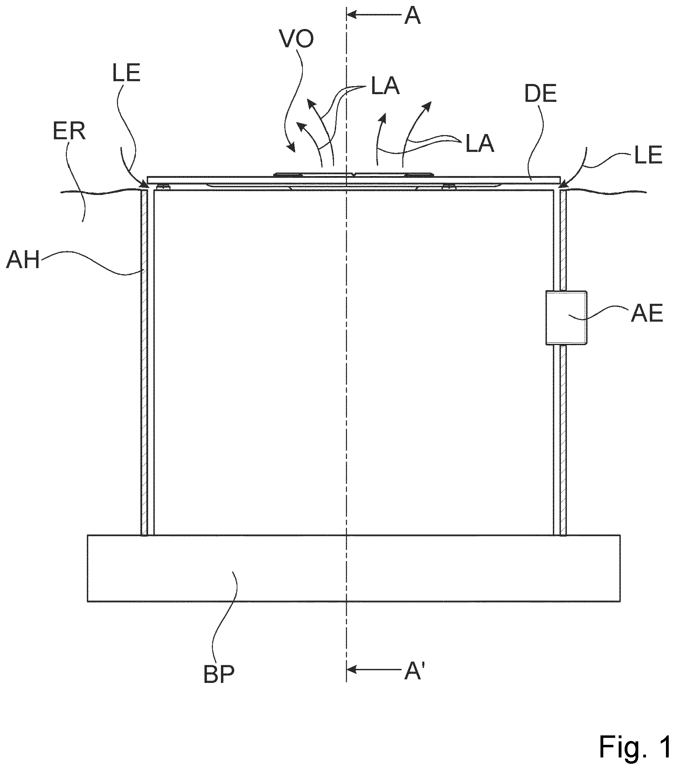

In Figur 1 ist in einer Ausführungsform eine erfindungsgemäße Vorrichtung VO in einer Seitenansicht gezeigt. Die Vorrichtung VO wird typischerweise im Außenbereich eines Gebäudes installiert, das mittels der Vorrichtung VO beheizt oder gekühlt werden soll. Um eine einfache Installation der Vorrichtung VO zu ermöglichen, wird zunächst die zu installierende Grundfläche bereitgestellt, wobei hier typischerweise als Boden eine Betonplatte BP vorgesehen werden kann. Desweiteren wird im Außenbereich des Gebäudes Erdreich ER entfernt, so dass eine Außenhülle AH eingebracht werden kann, die auf der Bodenplatte BP ruht. Vor dem Einbringen der Außenhülle AH wird typischerweise ein Leitungsstrang zu einer im Gebäude untergebrachten Wärmepumpe verlegt, der - wie weiter unten noch erläutert werden wird - über eine Anschlusseinheit AE mit der Vorrichtung VO verbunden werden wird. Für eine materialsparende Ausgestaltung der Außenhülle AH kann es vorgesehen sein, bis zur Installation der Vorrichtung VO einen entsprechenden Platzhalter in das Innere der Außenhülle AH einzusetzen, der als stabilisierender Kern wirkt und ausbeulende Außenhülle AH verhindern soll. Typischerweise ist die Außenhülle AH bezüglich ihrer Höhe so ausgebildet, dass die Vorrichtung VO vollständig oder nahezu vollständig im Erdreich ER zu liegen kommt. Für den Betrieb der Vorrichtung VO ist es jedoch wichtig, dass ein Lufteinlass LE Umgebungsluft das Innere der Vorrichtung VO führt und diese über einen Luftauslass LA wieder abgeben kann. Dazu ist die Vorrichtung VO auf ihrer Oberseite mit einem Deckel DE versehen, der den Querschnitt der Außenhülle AH nahezu vollständig überdeckt, wobei lediglich ein umfangsseitig angeordneter Spalt verbleibt, der zumindest abschnittsweise als Lufteinlass LE herangezogen werden kann.

Der in Figur 1 gezeigte Deckel DE sowie die Oberseite des Erdreichs RE bilden eine nahezu ebene Fläche, wobei die Außenhülle AH typischerweise in Form eines Zylinders mit kreisförmigem Querschnitt ausgebildet ist, die über ihre ganze axiale Höhe im Erdreich ER angeordnet ist. In anderen Ausführungsformen kann es jedoch möglich sein, dass die Vorrichtung VO teilweise über die Oberseite des Erdreichs hinausragt, so dass der Lufteinlass LE ebenfalls über einen zylindrischen Außenbereich erfolgen könnte. Anstelle einer Außenhülle AH wäre dann hier beispielsweise ein Schutzgitter oder dergleichen zwischen der Oberseite des Erdreichs ER und dem Deckel DE angebracht.

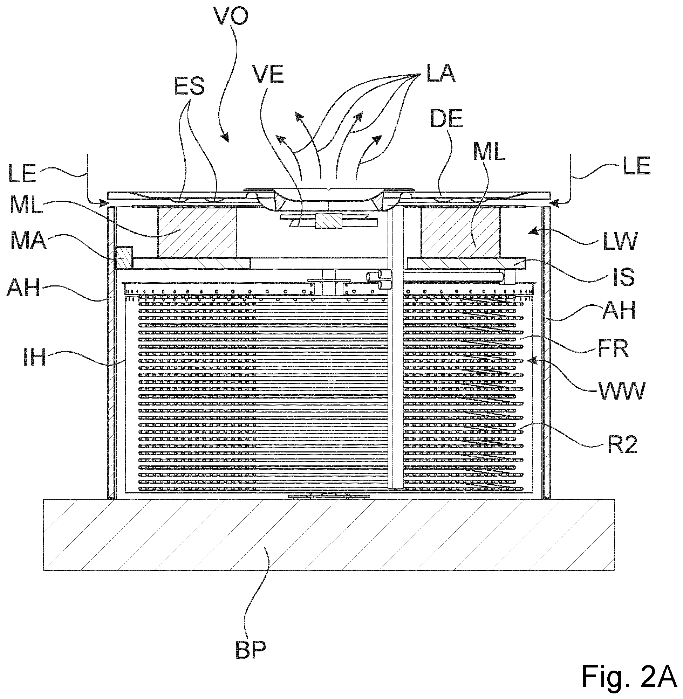

Unter Bezugnahme auf Figur 2A wird nun eine Schnittansicht durch die Ebene A - A' erläutert, die das Innere der Vorrichtung VO gemäß einer ersten Ausführungsform der Erfindung detailliert zeigt. Die Vorrichtung VO ist aus einem Luftwärmetauscher LW und einem Wasserwärmetauscher WW aufgebaut, wobei der Wasserwärmetauscher WW ein innerhalb einer Innenhülle IH ausgebildetes Flüssigkeitsreservoir FR aufweist, das auf der Bodenplatte BP ruht. Nach oben hin ist der Wasserwärmetauscher WW vom Luftwärmetauscher LW mittels einer Isolationsschicht IS getrennt, die bezüglich der Außenhülle AH durch eine nachträglich einzubringende Manschette MA weiter abgedichtet ist. Somit ist es möglich, die Einheit, bestehend aus Luftwärmetauscher LW, Isolationsschicht IS und Wasserwärmetauscher WW gemeinsam in das Innere der Außenhülle AH zu führen, wobei mittels der Manschette MA nachträglich eine Isolation zwischen dem vom Lufteinlass LE durchströmten Bereich des Luftwärmetauschers LW und dem Bereich des Wasserwärmetauschers WW geschaffen werden kann. Der Luftwärmetauscher LW weist mehrere Metalllamellen ML auf, die in Form mehrerer Blöcke angeordnet sind. hierbei werden die Lamellen typischerweise aus Gründen der Gewichtsreduzierung in Aluminium gefertigt, während die die Lamellen verbindenden Rohre aus Kupfer hergestellt sein können. Die Metalllamellen ML werden von Umgebungsluft umströmt, wobei die Umgebungsluft über den Lufteinlass LE mittels eines Ventilators VE zum Luftauslass LA am Deckel DE geführt wird. Entsprechende Zu- bzw. Abflussleitungen der Metalllamellen ML werden, wie nachfolgend noch erläutert werden wird, mit der im Gebäude befindlichen Wärmepumpe verbunden.

Der Wasserwärmetauscher WW weist ebenfalls kreisförmig aufgewickelte zweite Rohre R2 auf, die innerhalb des Flüssigkeitsreservoirs FR angeordnet sind. Typischerweise wird das Flüssigkeitsreservoir FR mit Wasser gefüllt sein, wobei jedoch andere Flüssigkeitsmedien, wie z. B. Paraffinverbindungen oder dergleichen nicht ausgeschlossen sind. Auch hier werden wiederum entsprechende Zuleitungen bzw. Abflussleitungen eine Verbindung mit der im Gebäude befindlichen Wärmepumpe herstellen, wobei sowohl die ersten Rohre R1 als auch die zweiten Rohre R2 typischerweise mit einem Wasserglykolgemisch durchströmt sind, um einen Energietransfer bzw. eine Energiespeicherung zu erreichen.

Desweiteren ist in Figur 2A zu erkennen, dass der Deckel DE mit einer Vielzahl von Einsenkungen ES gebildet wird, die mit Erdreich oder auch mit Wasser gefüllt sein können, um eine optisch ansprechende Gestaltung, beispielsweis ein einem Garten eines Wohnhauses, zu ermöglichen. Der Deckel DE kann aber auch so ausgestaltet sein, dass er begehbar oder befahrbar ist, um sich beispielsweise in bereits vorhandene Wege einzufügen.

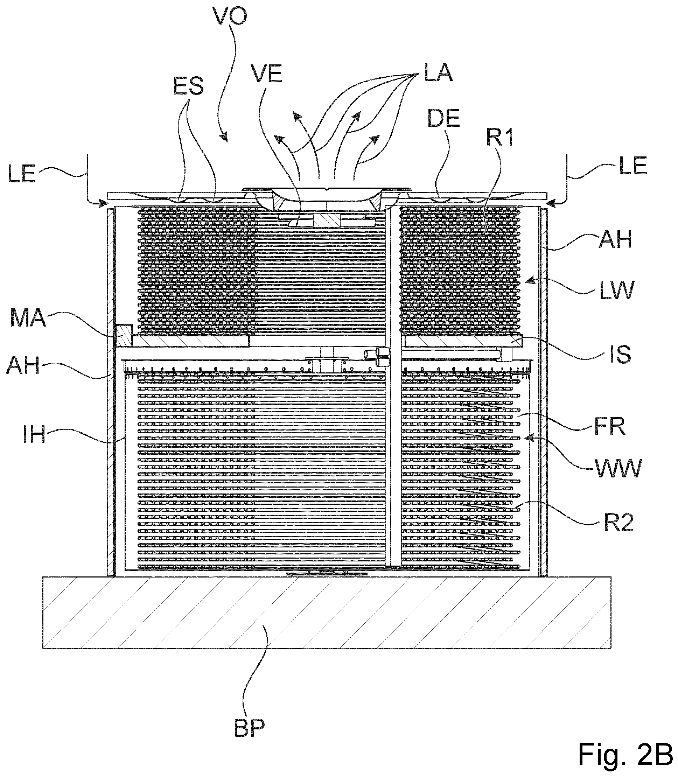

In Figur 2B ist eine Schnittansicht durch die Ebene A - A' dargestellt, die das Innere der Vorrichtung VO gemäß einer zweiten Ausführungsform der Erfindung detailliert zeigt. Die Vorrichtung VO ist wiederum aus einem Luftwärmetauscher LW und einem Wasserwärmetauscher WW aufgebaut. Im Gegensatz zur Ausführungsform der Figur 2A weist der Luftwärmetauscher LW eine Vielzahl erster Rohre R1 auf, die von Umgebungsluft umströmt werden, wobei die Umgebungsluft über den Lufteinlass LE mittels eines Ventilators VE zum Luftauslass LA am Deckel DE geführt wird. Entsprechende Zu- bzw. Abflussleitungen der ersten Rohre R1 werden mit der im Gebäude befindlichen Wärmepumpe verbunden. Die ersten Rohre R1 können beispielsweise aus Kunststoff gefertigt sein.

Obwohl die Darstellungen der Figur 2A bzw. 2B keine Maßangaben erhalten, ist dennoch zu erkennen, dass sich die beiden Vorrichtungen VO in ihrer Größe unterscheiden. Allgemein kann mit dem erfindungsgemäßen Aufbau der Vorrichtungen VO die Leistung bzw. Auslegung des Wärmespeichers gezielt verändert oder angepasst werden. Dazu kann sowohl der Durchmesser als auch die Höhe des Energiespeicher verändert werden. Des Weiteren kann durch die Anordnung bzw. die Ausführung des Luftwärmetauscher LW und des Wasserwärmetauscher WW eine Anpassung erreicht werden.

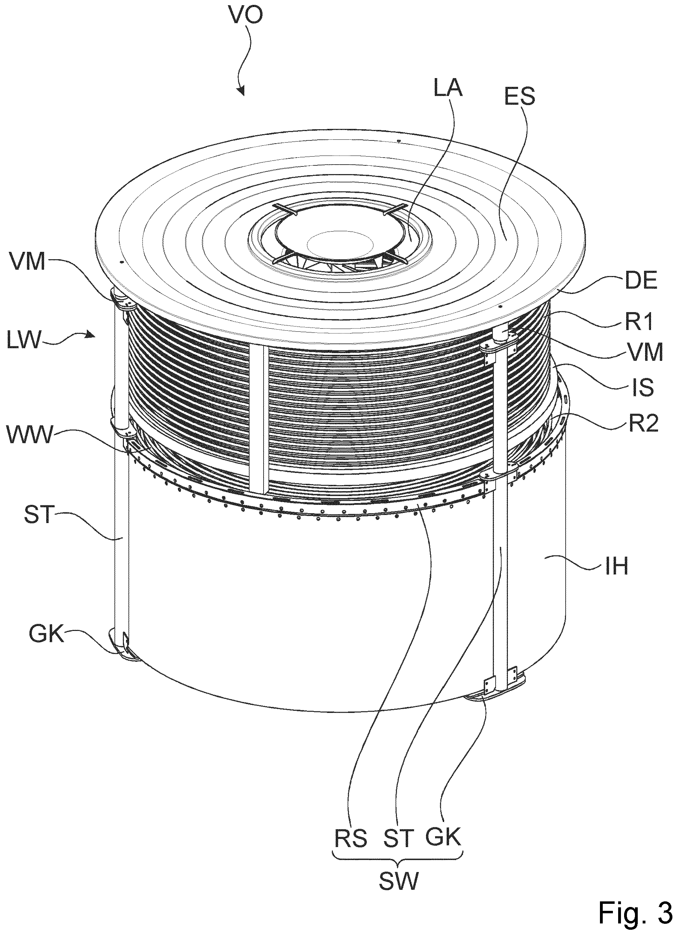

Unabhängig von der Ausgestaltung des Luftwärmetauschers LW kann es nach Befüllen des Flüssigkeitsreservoirs FR des Wasserwärmetauschers WW insbesondere vorgesehen sein, dass die Innenhülle IH aufgrund einer flexiblen Ausgestaltung in Richtung der Außenhülle AH gepresst wird, was eine zusätzliche Stabilisierung der Außenhülle AH zum umgebenden Erdreich ER schafft. Wie bereits erwähnt, ist die gesamte Vorrichtung nach Bereitstellen der Außenhülle AH auf der Bodenplatte BP im Wesentlichen in einem Arbeitsschritt einsetzbar, wie nachfolgend unter Bezugnahme auf Figur 3 detaillierter erläutert wird.

Figur 3 zeigt eine perspektivische Seitenansicht der Vorrichtung VO, wobei hier die Vorrichtung VO ohne das umgebende Erdreich bzw. die Außenhülle AH dargestellt ist. Um eine mechanische Stabilisierung zu erreichen, wird ein Ständerwerk SW bereitgestellt, das zunächst einen Grundkörper GK aufweist, der beispielsweise sternförmig auf der Bodenplatte BP angeordnet sein kann und jeweils auf der Außenseite in eine vertikale Strebe ST mündet, die von der Bodenplatte BP entlang der kompletten Außenhülle AH reicht und an ihrem oberen Ende mit einem Verstellmittel VM versehen ist, das eine Verbindung der Strebe ST zum Deckel DE schafft, die bezüglich ihrer Länge einstellbar ist, so dass der Deckel DE beispielsweise auf die gewünschte horizontale Lage ausgerichtet werden kann, was insbesondere dann vorteilhaft ist, wenn die Bodenplatte BP eine im Vergleich zu einer horizontalen Ausrichtung geringfügige Abweichung erfahren hat. Des Weiteren kann ein separater innerer Deckel in der Höhe ebenfalls einstellbar sein, was zusammen oder getrennt voneinander erfolgen kann. Ein Ringsegment RS bildet den Abschluss des Wasserwärmetauschers WW, wobei das Ringsegment RS die einzelnen Streben ST umfangsseitig miteinander verbindet und somit auch für einen zusätzlichen Halt des Ständerwerks SW sorgt. In das Ringsegment RS ist die Außenhülle IH in Form einer flexiblen Folie eingehängt, um das oben beschriebene stabilisierende Außenhülle AH aufgrund des hydrostatischen Drucks im Inneren der Innenhülle IH zu erreichen. Die Befestigung der Folie als Innenhülle IH am Ringsegment RS kann dabei auf unterschiedliche Weisen erfolgen, wobei neben Einhängen auch andere form- oder kraftschlüssige Verbindungsmöglichkeiten in Betracht kommen. Desweiteren ist Figur 3 zu entnehmen, dass die Isolationsschicht IS bis auf den Bereich in der Nähe der Streben ST den Luftwärmetauscher LW vom Wasserwärmetauscher WW isoliert, wobei, wie bereits oben erwähnt, diese noch verbleibenden Randbereiche mittels einer Manschette oder dergleichen abgedichtet werden können. Die in Figur 3 gezeigte Vorrichtung kann im Wesentlichen vollständig in die Außenhülle AH eingesetzt werden, so dass nach Befüllen des Flüssigkeitsreservoirs FR beispielsweise mit Wasser und dem Anschließen der ersten Rohre R1 und der zweiten Rohre R2 an die Wärmepumpe die Vorrichtung VO betriebsbereit wäre.

Das Ständerwerk SW bzw. die Streben ST erfüllen hier für den Wasserwärmetauscher WW auch die Funktion eines Verteilrohrs der einzelnen Rohrleitungen der zweiten Rohre R2 des Wasserwärmetauschers und fungiert somit sowohl als Stütze und als Zu- bzw. Rückführung des Fluids in die einzelnen Rohren R2.

Eine derartige Funktion kann auch für der Luftwärmetauscher LW übernommen werden, sofern ein Ausführung gemäß Fig. 2B gewählt wird.

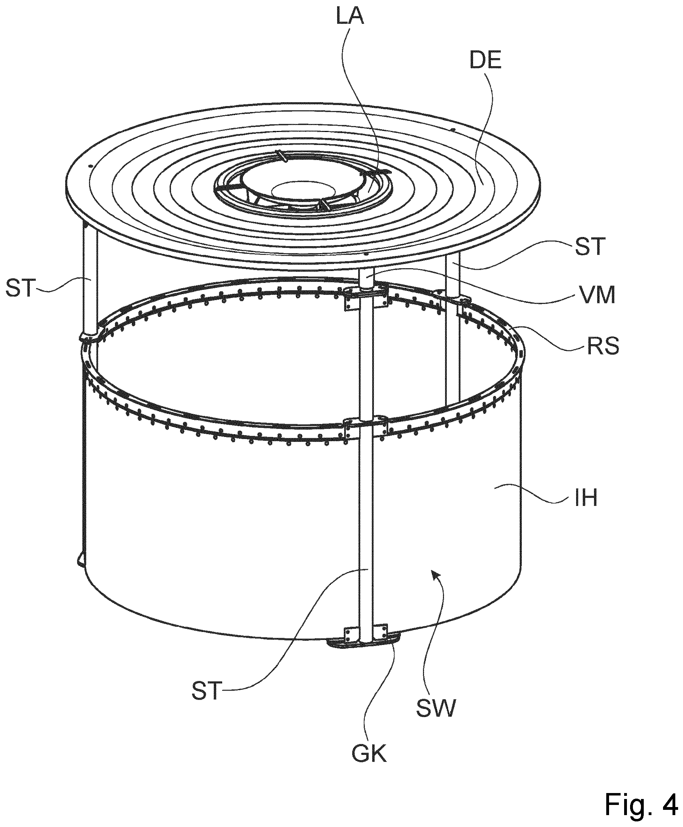

In Figur 4 ist der Aufbau des Ständerwerks SW, des Deckels DE sowie der Innenhülle IH nochmals ohne die den Luftwärmetauscher LW und den Wasserwärmetauscher WW bildenden Komponenten gezeigt. Man erkennt, dass ein einfacher, aber dennoch stabiler Aufbau geschaffen werden kann, der insbesondere die Produktionskosten für eine derartige Energietransfer- bzw. Energiespeichervorrichtung deutlich reduziert.

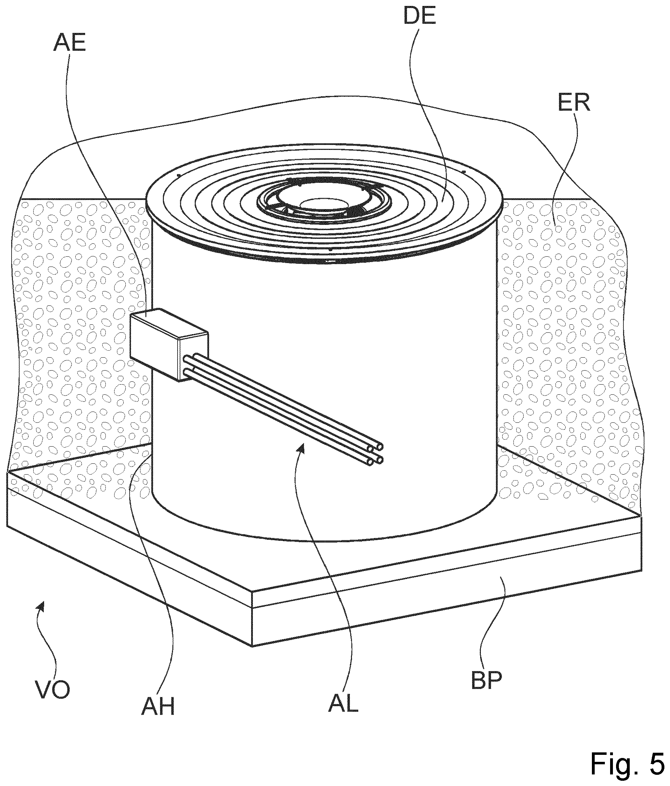

In Figur 5 ist nochmals eine Ansicht gezeigt, die ein teilweise gebrochen dargestelltes Erdreich ER verwendet, um den Aufbau nochmals näher zu erläutern.

Man erkennt, dass Anschlussleitungen AL an die Anschlusseinheit AE geführt sind, die eine Verbindung zu einer Wärmepumpe schaffen. Die Anschlusseinheit AE wird auf ihrer inneren Seite durch entsprechende Anschlüsse mit den ersten Rohren R1 und den zweiten Rohren R2 verbunden sein. Dazu werden die Anschlussleitungen zunächst radial bereits vormontiert an der Vorrichtung befestigt, so dass nach Einsetzen der Vorrichtung VO in die Außenhülle AH lediglich ein Anschluss zur Anschlusseinheit AE geschaffen werden muss. Auf diese Weise ist eine deutliche Reduzierung der zur Installation notwendigen Arbeiten möglich, was die Kosten für eine erfindungsgemäße Vorrichtung weiter verringern kann. Eine weitere wichtige Eigenschaft ist, dass der komplette Energiespeicher (evtl. auch mit Außenhülle AH) im Werk vormontiert und dann als Einheit ausgeliefert und installiert werden kann.

Die Form der Vorrichtung VO kann bezüglich der Grundfläche sowohl wie dargestellt rund als auch als Vieleck ausgeführt werden. Andere Formen wie elliptisch oder dergleichen, sind nicht ausgeschlossen.

## Patentansprüche

1. Vorrichtung zur Energieübertragung und zur Energiespeicherung in einem Flüssigkeitsreservoir (FR), wobei die Vorrichtung (VO) einen auf einem Boden (BP) angeordneten Wasserwärmetauscher (WW) und ein Ständerwerk (SW) aufweist, wobei der Wasserwärmetauscher (WW) in einem Flüssigkeitsreservoir (FR) angeordnet ist, das von einer der Innenhülle (IH) umgeben ist, die die Vorrichtung (VO) gegen eine die Innenhülle (IH) vom Boden aus überdeckende Außenhülle (AH) abgrenzt, wobei die Außenhülle (AH) wenigstens teilweise in eine Erdschicht (ER) eingebracht werden kann, wobei die Vorrichtung (VO) einen über dem Wasserwärmetauscher (WW) angeordneten Luftwärmetauscher (LW) aufweist, und wobei die Vorrichtung (VO) oben durch einen Deckel (DE) so abgeschlossen ist, das ein Luftstrom von einem Lufteinlass (LE) zu einem Luftauslass (LA) durch den Luftwärmetauscher (LW) erzeugbar ist, **dadurch gekennzeichnet, dass** beabstandet zur Außenhülle (AH) das auf dem Boden (BP) angebrachtes Ständerwerk (SW) vorgesehen ist, das den Deckel (DE) trägt, dass das Ständerwerk (SW) mit einem wenigstens teilweise umlaufenden Ringsegment (RS) versehen ist, das als oberer Abschluss der Innenhülle (IH) dient, und dass die Innenhülle (IH) als flexible Folie ausgeführt ist, die mit dem Ringsegment (RS) verbunden ist.

2. Vorrichtung nach Anspruch 1, bei der zwischen dem Wasserwärmetauscher (WW) und dem Luftwärmetauscher (LW) eine Isolationsschicht (IS) angeordnet ist.

3. Vorrichtung nach Anspruch 2, bei der zwischen der Isolationsschicht (IS) und der Außenhülle (AH) eine Abdichtung angebracht ist, die vorzugsweise als wenigstens teilweise umlaufende Manschette (MA) ausgebildet ist.

4. Vorrichtung nach Anspruch 1, bei der das Ständerwerk (SW) aus mehreren vertikalen Stützen zusammengesetzt ist, die auf der dem Deckel (DE) zugewandten Seite mit einem Verstellmechanismus (VM) versehen sind, um die Lage des Deckels (DE) auszurichten.

5. Vorrichtung nach Anspruch 1, bei der die Innenhülle (IH) in das Ringsegment (RS) eingehängt ist.

6. Vorrichtung nach einem der Ansprüche 1 bis 5, bei der der Lufteinlass (LE) schlitzförmig entlang des Außenumfang des Deckels (DE) ausgebildet ist.

7. Vorrichtung nach einem der Ansprüche 1 bis 6, bei der der Deckel (DE) mit dem Luftauslass (LA) mittig am Deckel (DE) angeordnet ist, wobei vorzugsweise unterhalb des Deckels (DE) am Luftauslass (LA) ein Ventilator (VE) angeordnet ist.

8. Vorrichtung nach einem der Ansprüche 1 bis 7, bei der der Deckel (DE) mit einer oder mehreren Einsenkungen (ES) versehen ist, die mit Wasser oder Erdreich gefüllt sein können, um eine naturnahe Erscheinung der Vorrichtung (VO) zu schaffen, oder bei der der Deckel (DE) befahrbar oder begehbar ist.

9. Vorrichtung nach einem der Ansprüche 1 bis 8, bei der der Wasserwärmetauscher (WW) in Wasser oder Paraffinverbindungen als Flüssigkeitsmedium des Flüssigkeitsreservoirs (FR) angeordnet ist.

10. Vorrichtung nach einem der Ansprüche 1 bis 9, bei der der hydrdynamische Druck im Flüssigkeitsreservoir (FR) die Innenhülle (IH) gegen die Außenhülle (AH) presst.

11. Vorrichtung nach einem der Ansprüche 1 bis 10, bei der der Luftwärmetauscher (LW) und der Wasserwärmetauscher (WW) jeweils mit einer Vielzahl von kreisförmig angeordneten Rohren (R1; R2) ausgeführt sind, die über Zufluss- und Abflussleitungen mit einer Anschlusseinheit (AE) verbunden sind.

12. Vorrichtung nach Anspruch 11, bei der die Außenhülle (AH) von der Anschlusseinheit (AE) durchbrochen ist, die vorzugweise in einer Höhe zwischen dem Wasserwärmetauscher (WW) und dem Luftwärmetauscher (LW) angeordnet ist.

13. Vorrichtung nach einem der Ansprüche 1 bis 12, bei der der Luftwärmetauscher (LW) und der Wasserwärmetauscher (WW) so ausgeführt sind, dass die Vorrichtung (VO) eine im wesentlichen zylindrische Außenform aufweist.

## Claims

1. Device for energy transfer and energy storage in a liquid reservoir (FR), the device (VO) having a water heat exchanger (WW) arranged on a base (BP) and having a frame structure (SW), the water heat exchanger (WW) being arranged in a liquid reservoir (FR) which is surrounded by an inner shell (IH) that delimits the device (VO) from an outer shell (AH) covering the inner shell (IH) from the base, it being possible for the outer shell (AH) to be introduced at least in part into a layer of earth (ER), wherein the device (VO) has an air heat exchanger arranged above the water heat exchanger (WW), and wherein the device (VO) is closed at the top by a cover (DE) in such a way that an air flow from an air inlet (LE) to an air outlet (LA) through the air heat exchanger (LW) can be generated, **characterized in that** at a distance from the outer shell (AH) the frame structure (SW) is attached to the base (BP) and supports the cover (DE), the frame structure (SW) is provided with an at least partially peripheral ring segment (RS) which serves as the upper end of the inner shell (IH), and the inner shell (IH) is designed as a flexible film which is connected to the ring segment (RS).

2. Device according to claim 1, wherein an insulation layer (IS) is arranged between the water heat exchanger (WW) and the air heat exchanger (LW).

3. Device according to claim 2, wherein a seal is applied between the insulation layer (IS) and the outer shell (AH), which seal is preferably designed as an at least partially peripheral collar (MA).

4. Device according to claim 1, wherein the frame structure (SW) is composed of a plurality of vertical supports which are provided with an adjusting mechanism (VM) on the side facing the cover (DE) in order to align the position of the cover (DE).

5. Device according to claim 1, wherein the inner shell (IH) is suspended in the ring segment (RS).

6. Device according to any of claims 1 to 5, wherein the air inlet (LE) is formed along the outer periphery of the cover (DE) in the form of a slot.

7. Device according to any of claims 1 to 6, wherein the cover (DE) with the air outlet (LA) is arranged in the center of the cover (DE) and a fan (VE) is preferably arranged below the cover (DE) at the air outlet (LA).

8. Device according to any of claims 1 to7, wherein the cover (DE) is provided with one or more depressions (ES) which can be filled with water or soil in order to create a natural appearance of the device (VO), or wherein the cover (DE) can be driven over or walked upon.

9. Device according to any of claims 1 to 8, wherein the water heat exchanger (WW) is arranged in water or paraffin compounds as the liquid medium of the liquid reservoir (FR).

10. Device according to any of claims 1 to 9, wherein the hydrodynamic pressure in the liquid reservoir (FR) presses the inner shell (IH) against the outer shell (AH).

11. Device according to any of claims 1 to 10, wherein the air heat exchanger (LW) and the water heat exchanger (WW) are each designed having a plurality of tubes (R1; R2) arranged in a circle, which tubes are connected to a connection unit (AE) via inflow and outflow lines.

12. Device according to claim 11, wherein the outer shell (AH) is penetrated by the connection unit (AE), which is preferably arranged at a height between the water heat exchanger (WW) and the air heat exchanger (LW)

13. Device according to any of claims 1 to 12, wherein the air heat exchanger (LW) and the water heat exchanger (WW) are designed such that the device (VO) has an substantially cylindrical outer shape.

## Revendications

1. Dispositif destiné au transfert d'énergie et au stockage d'énergie dans un réservoir de liquide (FR), le dispositif (VO) présentant un échangeur de chaleur à eau (WW) disposé sur un fond (BP) et une structure de montants (SW), l'échangeur de chaleur à eau (WW) étant disposé dans un réservoir de liquide (FR), lequel est entouré par une enveloppe intérieure (IH) qui délimite le dispositif (VO) par rapport à une enveloppe extérieure (AH) recouvrant l'enveloppe intérieure (IH) par le fond, l'enveloppe extérieure (AH) pouvant être introduite au moins partiellement dans une couche de terre (ER), le dispositif (VO) présentant un échangeur de chaleur à air disposé au-dessus de l'échangeur de chaleur à eau (WW), et le dispositif (VO) étant fermé par le haut par un couvercle (DE) de telle sorte qu'un flux d'air peut être généré depuis une entrée d'air (LE) vers une sortie d'air (LA) à travers l'échangeur de chaleur à air (LW), **caractérisé en ce que** la structure de montants (SW) fixée au fond (BP) est prévue à distance de l'enveloppe extérieure (AH), ladite structure supportant le couvercle (DE), **en ce que** la structure de montants (SW) est pourvue d'un segment annulaire (RS) au moins partiellement circonférentiel, lequel sert d'arête supérieure de l'enveloppe intérieure (IH), et **en ce que** l'enveloppe intérieure (IH) est réalisée sous la forme d'un film souple qui est relié au segment annulaire (RS).

2. Dispositif selon la revendication 1, dans lequel une couche isolante (IS) est disposée entre l'échangeur de chaleur à eau (WW) et l'échangeur de chaleur à air (LW).

3. Dispositif selon la revendication 2, dans lequel un joint est fixé entre la couche isolante (IS) et l'enveloppe extérieure (AH), lequel joint est de préférence agencé comme une manchette (MA) au moins partiellement enveloppante.

4. Dispositif selon la revendication 1, dans lequel la structure de montants (SW) est composée de plusieurs supports verticaux qui sont pourvus d'un mécanisme de réglage (VM) du côté faisant face au couvercle (DE) afin d'aligner la position du couvercle (DE).

5. Dispositif selon la revendication 1, dans lequel l'enveloppe intérieure (IH) est suspendue dans le segment annulaire (RS).

6. Dispositif selon l'une des revendications 1 à 5, dans lequel l'entrée d'air (LE) est conçue sous la forme d'une fente le long de la circonférence extérieure du couvercle (DE).

7. Dispositif selon l'une des revendications 1 à 6, dans lequel le couvercle (DE) comportant la sortie d'air (LA) est disposé au centre du couvercle (DE), et un ventilateur (VE) est de préférence disposé sous le couvercle (DE) au niveau de la sortie d'air (LA).

8. Dispositif selon l'une des revendications 1 à 7, dans lequel le couvercle (DE) est pourvu d'une ou plusieurs dépressions (ES) qui peuvent être remplies d'eau ou de terre afin de créer une apparence naturelle du dispositif (VO), ou dans lequel le couvercle (DE) peut être praticable ou accessible.

9. Dispositif selon l'une des revendications 1 à 8, dans lequel l'échangeur de chaleur à eau (WW) est disposé dans de l'eau ou des composés de paraffine en tant que milieu liquide du réservoir de liquide (FR).

10. Dispositif selon l'une des revendications 1 à 9, dans lequel la pression hydrodynamique dans le réservoir de liquide (FR) presse l'enveloppe intérieure (IH) contre l'enveloppe extérieure (AH).

11. Dispositif selon l'une des revendications 1 à 10, dans lequel l'échangeur de chaleur à air (LW) et l'échangeur de chaleur à eau (WW) sont respectivement réalisés avec une pluralité de tubes (R1 ; R2) disposés en forme de cercle, lesquels sont reliés à une unité de raccordement (AE) par l'intermédiaire de conduites d'entrée et de sortie.

12. Dispositif selon la revendication 11, dans lequel l'enveloppe extérieure (AH) est perforée par l'unité de raccordement (AE), laquelle est de préférence disposée à une hauteur entre l'échangeur de chaleur à eau (WW) et l'échangeur de chaleur à air (LW).

13. Dispositif selon l'une des revendications 1 à 12, dans lequel l'échangeur de chaleur à air (LW) et l'échangeur de chaleur à eau (WW) sont réalisés de telle sorte que le dispositif (VO) présente une forme extérieure essentiellement cylindrique.
